# EUROPÄISCHE PATENTSCHRIFT

(11) **EP 0 462 404 B1**
(45) Veröffentlichungstag und Bekanntmachung des Hinweises auf die Patenterteilung: **13.04.1994**
(21) Anmeldenummer: 91108163.6
(22) Anmeldetag: 21.05.1991
(51) Int. Cl.: F02M 59/36, F02M 59/46, F02M 63/00, F02M 63/02

(54) **Kraftstoffeinspritzsystem für Brennkraftmaschinen**
Fuel injection system for internal combustion engine
Système d'injection de combustible pour moteurs à combustion interne

(30) Priorität: 20.06.1990 DE 4019586
(43) Veröffentlichungstag der Anmeldung: 27.12.1991
(73) Patentinhaber: ROBERT BOSCH GMBH, 70442 Stuttgart (DE)
(72) Erfinder: Rembold, Helmut, Dipl.-Ing., W-7000 Stuttgart 40 (DE); Linder, Ernst, Dipl.-Ing., W-7130 Mühlacker (DE)

(56) Entgegenhaltungen:
- EP-A- 0 307 947
- FR-A- 1 270 580
- GB-A- 2 060 051
- GB-A- 2 165 895
- US-A- 3 851 635
- PATENT ABSTRACTS OF JAPAN vol. 8, no. 64 (M-285)(1501) 27. März 1984 & JP-A-58 214 666 (SANWA) 13. Dezember 1983

## Beschreibung

### Stand der Technik

Die Erfindung geht von einem Verfahren zum Betreiben eines Kraftstoffeinspritzsystems nach der Gattung des Patentanspruchs 1 aus. Bei einem solchen, durch die GB-A 2 165 895 bekannten System sind als Verteilerventile Elektromagnetventile vorgesehen durch deren Öffnen der Einspritzbeginn gesteuert wird, während das Einspritzende durch ein gemeinsames elektromagnetisch betätigtes Steuerventil gesteuert wird, das bei Strombeaufschlagung in Schließstellung gebracht wird und durch Unterbrechung der Stromzufuhr in Öffnungsstellung gebracht wird. Zur Erzeugung variabler Einspritzdrücke wird dabei das gemeinsame Steuerventil bereits vor dem Öffnen des jeweiligen Verteilerventils geschlossen, wobei durch die Differenz der Steuerzeiten dieser Ventile der Einspritzdruck vor dem Öffnen des jeweiligen Verteilerventils zum Einspritzbeginn eingestellt wird. In diesem Falle müssen zwei Magnetventile pro Einspritztakt exakt angesteuert werden und die Öffnungs- und Schließcharakteristik dieser Ventile aufeinander abgestimmt werden. Dabei werden die Verteilerventile vor ihrem Öffnen schon mit Hochdruck beaufschlagt, was eine starke Ausführung des Antriebs dieser Ventile bedingt verbunden mit hohen Kosten für Ventil und Energiebereitstellung.

### Vorteile der Erfindung

Durch die erfindungsgemäße Lösung gemäß den Merkmalen des Patentanspruchs 1 werden diese Nachteile vermieden, da die Verteilerventile zum Schaltzeitpunkt nicht dem hohen Einspritzdruck ausgesetzt sind. Sie können wesentlich einfacher und kostengünstiger hergestellt werden bei geringerem Energiebedarf und höheren Schaltgeschwindigkeiten. Man erhält mit mehreren Pumpenkolben eine gleichmäßige Förderung mit einem hohen Druckniveau in den Einspritzleitungen von nur geringer Welligkeit.

In vorteilhafter Weiterbildung gemäß Patentanspruch 4 zur Durchführung des Verfahrens nach Patentanspruch 3 wird die Welligkeit des Förderdruckverlaufes über der Zeit in den Phasen der Einspritzung wesentlich reduziert, so daß gleiche Ausgangsdrücke zum Schließzeitpunkt des Kraftstoffeinspritzmengensteuerventils vorliegen. Damit erhält man bei praktisch konstanten Druckverhältnissen über die Dauer der Einspritzung nahezu keine Streuung von Einspritzmengen. Mit Hilfe der gewählten Steuerung kann in vorteilhafter Weise der Kraftstoff zu verschiedenen Zeiten bei z.B. einer im Viertaktbrennverfahren arbeitenden Brennkraftmaschine eingebracht werden. Die Kraftstoffeinspritzung erfolgt dabei vorteilhaft direkt in den Brennraum der Brennkraftmaschine, wobei als Brennkraftmaschine sowohl Dieselbrennkraftmaschinen als auch fremdgezündete Brennkraftmaschinen vorgesehen werden können. Eine vorteilhafte Ausführung der Verteilerventile ist in Anspruch 9 gekennzeichnet.

### Zeichnung

Zwei Ausführungsbeispiele der Erfindung sind in der Zeichnung dargestellt und werden in der nachfolgenden Beschreibung näher erläutert. Es zeigen Figur 1 eine schematische Darstellung des Kraftstoffeinspritzsystems nach der Erfindung, Figur 2 ein Steuerdiagramm zur Ansteuerung der Verteilerventile und des Kraftstoffmengensteuerventils über den Kurbelwellenwinkel, Figur 3 ein Ausführungsbeispiel eines Verteilerventils und Figur 4 ein zweites Ausführungsbeispiel der Erfindung mit 3/3-Magnetventilen in schematischer Darstellung.

### Beschreibung der Ausführungsbeispiele

Zur Kraftstoffversorgung einer Brennkraftmaschine wird im nachfolgenden ein Kraftstoffeinspritzsystem beschrieben, mit dem Kraftstoff direkt in die Brennräume einer Brennkraftmaschine eingespritzt wird. Dies ist sowohl bei selbstzündenden Brennkraftmaschinen als auch in besonders vorteilhafter Weise bei fremdgezündeten Brennkraftmaschinen möglich, wobei dort, anders als bei selbstzündenden Brennkraftmaschinen der Einspritzzeitpunkt in großen Kurbelwellenwinkelbereichen von z. B. 0 bis 360 Grad Kurbelwellenwinkel gewählt werden kann. Bei einem derartigen System kann z. B. eine fremdgezündete Brennkraftmaschine in der Weise mit Kraftstoff versorgt werden, daß im Teillastbereich ein mageres Kraftstoffluftgemisch zur Verbrennung kommt mit Ladungsschichtung infolge Einspritzen kurz vor dem Zündzeitpunkt und bei Vollastbetrieb durch Einspritzung während des Saugphase ein homogenes Kraftstoffluftgemisch mit Luftverhältnis λ=1 zu Verbrennung bereitgestellt wird.

Zur Druckerzeugung bei einem solchen Kraftstoffeinspritzsystem ist eine Hochdruckpumpe 1 vorgesehen, die als an sich bekannte intermittierend fördernde Reiheneinspritzpumpe, Radialkolbeneinspritzpumpe oder Axialkolbenpumpe ausgeführt sein kann. Es kann aber auch zur Reduzierung von Druckpulsationen eine kontinuierlich fördernde Pumpe verwendet werden, insbesondere eine Zahnradpumpe. In der vorgesehen Ausführungsform weist die Hochdruckeinspritzpumpe mehrere Pumpenkolben auf, die von entsprechenden Antriebsnocken angetrieben werden und Kraftstoff unter Hochdruck in einem Kraftstoffverteiler fördern.

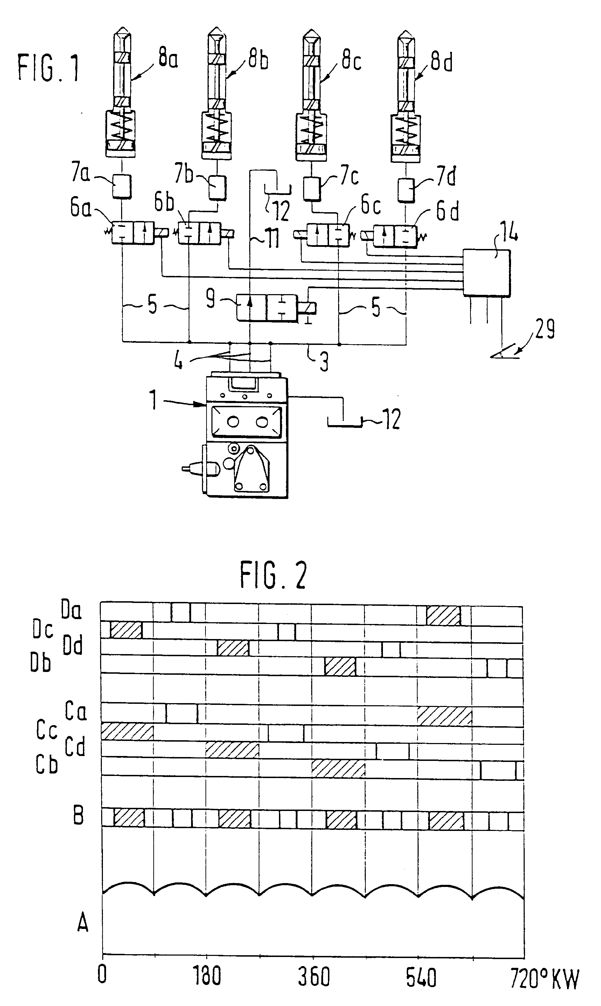

Der Antriebsnocken kann in einfacher Ausführung ein Exzenter sein. In der Figur 1 sind drei Förderleitungen 4 gezeigt, die von den drei Pumpenarbeitsräumen der Drei-Zylinderhochdruckeinspritzpumpen ausgehend in einen Verteiler 3 münden. Von diesem zweigen Einspritzleitungen 5 ab, in denen jeweils ein als Verteilerventil dienendes 2/2-Magnetventil 6a bis 6d angeordnet ist. Stromabwärts dieses Ventils liegt in der Einspritzleitung jeweils ein Druckventil 7a bis 7d, dem dann jeweils das Kraftstoffeinspritzventil 8a bis 8d nachgeordnet ist. Vom Verteiler 3 zweigt ferner eine Entlastungsleitung 11 über ein elektrisch gesteuertes Kraftstoffeinspritzmengensteuerventil 9 ab, ebenfalls als 2/2-Magnetventil ausgeführt. Die Entlastungsleitung 11 führt zu einem Kraftstoffvorratsbehälter 12 zurück, aus dem auch die Hochdruckeinspritzpumpe mit Kraftstoff versorgt wird. Stattdessen kann die Entlastungsleitung in einen Kraftstoffversorgungsraum führen, der durch eine Vorförderpumpe auf einen niedrigen Ausgangsdruck gehalten wird.

Im Betrieb fördert die Hochdruckeinspritzpumpe den Kraftstoff mit gleichbleibenden Förderhub ungeregelt in den Verteiler 3. Dieser wird zunächst über das Kraftstoffeinspritzmengensteuerventil 9, das stromlos geöffnet ist, und über die Entlastungsleitung 11 entlastet, so daß der zur Einspritzung erforderlich Kraftstoffdruck nicht erreicht wird. Die Verteilerventile 6 sind zunächst alle geschlossen und zwar im nicht erregten Zustand. Vor der beabsichtigten Einspritzphase in einen der Zylinder der zugehörigen Brennkraftmaschine wird dann das dem entsprechenden Kraftstoffeinspritzventil 8 zugeordnete Magnetventil, von einer Steuereinrichtung 14 gesteuert, geöffnet, so daß die Verbindung zwischen Verteiler 3 und Einspritzventil 8 hergestellt ist. Erst dann wird das Kraftstoffeinspritzmengensteuerventil 9 geschlossen. Es baut sich dann der vor der Einspritzung notwendige hohe Kraftstoffdruck auf, der somit nur an dem durch das geöffnete Verteilerventil 6 angesteuerten Einspritzventil 8 wirksam ist. Zur Beendigung der Hochdruckkraftstoffeinspritzung wird das Kraftstoffeinspritzmengensteuerventil 9 wieder geöffnet und dann das vorher offene Verteilerventil 6 geschlossen.

Das Drucksteuerventil 7a bis 7d ist ein Ventil derart, wie sie in der Verbindung zu Einspritzleitungen bei Kraftstoffeinspritzpumpen Verwendung finden. Es ist eine in Förderrichtung öffnendes Ventil, das bei Förderende schließt und dabei entweder die Kraftstoffeinspritzleitung über einen Rücksaugbund entlastet oder über ein Druckbegrenzungsventil auf ein gewünschtes Druckniveau hält.

In dem Diagramm in Figur 2 ist ein Beispiel von Steuerungszeiten dargestellt. Der Diagrammteil A von Figur 2 zeigt die pulsierende Förderung der Hochdruckeinspritzpumpe mit drei Pumpenkolben und entsprechender Übersetzung des Antriebs zwischen Kraftstoffeinspritzpumpe und Brennkraftmaschine. Dem Diagramm B sind die Schließzeiten des stromlos geöffneten Kraftstoffeinspritzmengensteuerventils 9 zu entnehmen. Darüber zugeordnet sind die Öffnungszeiten der Verteilerventile aufgezeigt, wobei die Darstellung Ca die die Öffnungszeiten des Steuerventils 6a und Cd die Öffnungszeiten des Verteilerventils 6d wiedergibt. In der darüberliegenden Darstellung sind die Einspritzzeiten als Blöcke dargestellt, wobei die Folgen Da bis Dd die Spritzzeiten der Ventile 8a bis 8d darstellen. Den Betrieb einer Brennkraftmaschine, die mit direkter Einspritzung arbeitet, kann man so gestalten, daß bei Vollast die Brennkraftmaschinenbrennräume mit einem möglichst homogenen Kraftstoffluftgemisch versorgt werden, deren Mischungsverhältnis mit Luft eine Luftzahl von λ = 1 aufweist, um einen möglichst schadstoffarmen Betrieb zu erzielen. Einer solchen Brennkraftmaschine können passende Katalysatoren noch nachgeschaltet sein. Um das gewünschte homogene Gemisch zu erzielen, wird in diesem Falle der Kraftstoff bereits während des Saugtaktes im ersten oder zweiten Quadranten des Kurbelwegs der Viertaktbrennkraftmaschine in den Brennraum eingebracht, so daß sich der Kraftstoff bis zum Zündzeitpunkt mit der eingebrachten Luft vermischen kann bzw. homogen verteilen kann. Am vorteilhaftesten wird dabei der Kraftstoff zu Zeiten hoher Luftbewegung in den Brennraum eingebracht, was schätzungsweise im Bereich des zweiten Quadranten des Kurbelweges des den jeweiligen Brennkraftmaschinenzylinder treiben den Kurbelarmes liegt. Im Teillastbereich kann eine solche Brennkraftmaschine allerdings auch mit einem wesentlich abgemagerten Gemisch betrieben werden. Dazu ist es aber nötig, den Kraftstoff kurz vor Zündung einzubringen, damit in der Nähe der Zündkerze ein zündfähiges Gemisch vorherrscht. Die Luftzufuhr bei einem solchen Betrieb erfolgt in der Regel ungedrosselt, so daß der Brennraum jeweils optimal gefüllt ist. Zu diesem Zweck muß der Spritzbeginn entsprechend spät in den dritten bzw. vierten Quadranten des Kurbelwellenweges gelegt werden. In den Diagrammen B-D sind diese unterschiedlichen Betriebsweisen als Steuer- bzw. Einspritzzeiten eingetragen. Die durchschraffierten Felder entsprechen dem Vollastbetrieb und die nicht schraffierten Felder dem Teillastbetrieb mit Schichtladung und insgesamt sehr magerer Brennraumfüllung.

Aus den Diagrammen C erkennt man, daß das jeweilige die Einspritzung steuernde Verteilerventil frühzeitig geöffnet wird und nach Öffnen dieses Ventils das Kraftstoffeinspritzmengensteuerventil 9 geschlossen wird. Der Schließzeit dieses Ventils gemäß B entspricht dann der Einspritzphase mit festgelegtem Spritzbeginn und der gewünschten Spritzdauer des entsprechenden Einspritzventils gemäß D.

Dem Diagramm A aus Figur 2 entnimmt man, daß eine Restwelligkeit des Druckverlaufes im Verteiler 3 vorhanden ist. Diese Welligkeit ist so gelegt, daß die Bereiche höchsten Druckes innerhalb der jeweiligen Einspritzzeit fallen. Die Welligkeit ist mit dem Brennkraftmaschinenantrieb also so synchronisiert, daß in Phasen der Einspritzung jeweils vergleichbare Einspritzdrücke herrschen. So ist z. B. die Einspritzung gemäß Da bei Teillastbetrieb im Bereich zwischen 90 und 180 Grad Kurbelwellenwinkel der Zählung nach Figur 2, also im Bereich eines Druckberges von A aber auch die im Bereich zwischen 540 und 630 Grad Kurbelwellenwinkel liegt im Bereich der Druckspitze im Verteiler 3.

Um die Restpulsation zu Zeiten der Einspritzung noch weiter zu reduzieren, kann eine kontinuierlich fördernde Hochdruckpumpe verwendet werden oder es kann der Antrieb der Hochdruckeinspritzpumpe so gewählt werden, daß der die Pumpenkolben antreibenden Nocken im Bereich der zu erwartenden Einspritzung dem Pumpenkolben eine gleichbleibende Fördergeschwindigkeit verleiht. Dies wird mit einem sogenannten Konstanthubnocken erzielt. Mit Hilfe solcher Konstanthubnocken ist es auch möglich, von einem einzigen Pumpenhub eines Pumpenkolbens der Hochdruckeinspritzpumpe hintereinander zwei Einspritzventile mit Kraftstoff zu versorgen so daß entweder die Antriebsdrehzahl oder die Zahl der Pumpenkolben der Hochdruckeinspritzpumpe verringert werden kann. Die Anpassung der Hochdruckeinspritzpumpe an die zu versorgende Brennkraftmaschine hat außer dem Brennverfahren auch die Zahl der Zylinder zu berücksichtigen. Entsprechend ist das Übersetzungsverhältnis zu wählen.

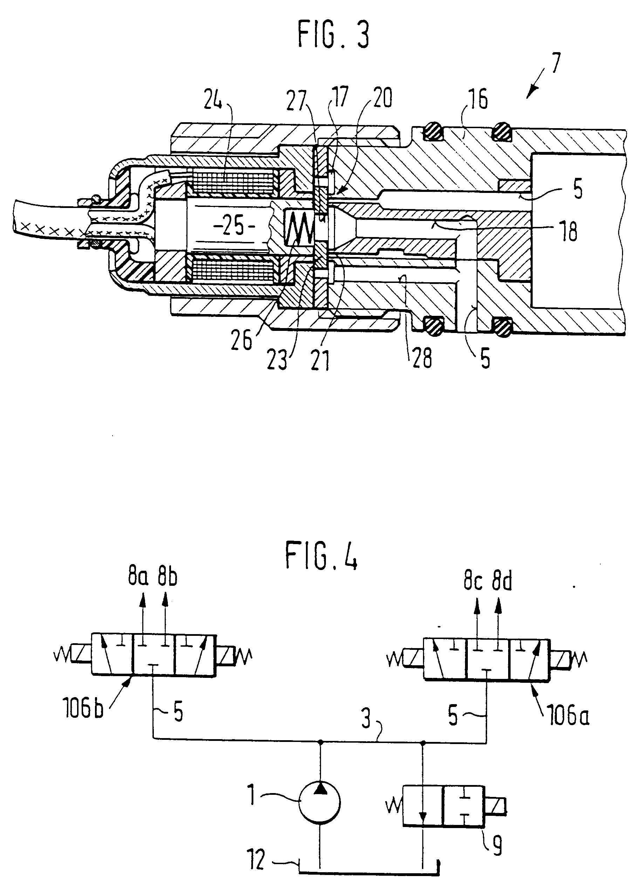

In Figur 1 wurde gezeigt, daß in der Einspritzleitung zu einem jeden Einspritzventil ein 2/2-Magnetventil eingesetzt ist, das im nicht erregten Zustand geschlossen ist. Stattdessen ist es gemäß Figur 4 möglich, für jeweils zwei Einspritzventile ein 3/3-Magnetventil 106a, 106b zu verwenden, das in seiner stromlosen Ruhelage die Verbindung zwischen Kraftstoffverteiler 3 und Kraftstoffeinspritzventilen geschlossen hat und in seiner einen erregten Stellung eines von zwei Einspritzventilen ansteuert und in seiner anderen erregten Stellung ein anderes Kraftstoffeinspritzventil ansteuert.

Verteilereinspritzventile der in Figur 1 gezeigten Ausführung sind der Figur 3 zu entnehmen. Das Verteilerventil 7 weist einen Ventilkörper 16 auf, der stirnseitig eine Ringnut 17 hat, zwischen der und einer axialen Bohrung 18 ein ringförmiger Ventilsitz 20 gebildet wird. Dieser weist eine mittige stirnseitige Ringöffnung 21 auf, die mit der zum Kraftstoffeinspritzventil führenden Einspritzleitung 5 verbunden ist. Diese führt parallel zur Achse des Ventilkörpers von der Ringöffnung 21 zum Einspritzventil ab. Die axiale Bohrung ist mit der verteilerseitigen Einspritzleitung 5 verbunden, die radial in den Ventilkörper 16 und dort in die axiale Bohrung 18 einmündet. Mit dem Ventilsitz arbeitet ein ringförmiges, mit einer mittleren Öffnung 27 versehenes, scheibenförmiges Ventilschließglied 23 zusammen, das gleichzeitig Anker eines Elektromagneten 24 ist, der stirnseitig dicht auf den Ventilkörper 16 aufgesetzt ist. Zwischen dem Kern 25 des Elektromagneten und dem Ventilschließglied ist eine Rückstellfeder 26 eingespannt, die das Ventilschließglied in Anlage an dem Ventilsitz 20 hält und dabei die weiterführende Kraftstoffeinspritzleitung 5 gegenüber der axialen Bohrung 18 verschließt. Der Ventilsitz ist also hier als Doppelsitzventil ausgebildet und erlaubt eine schnelle Öffnung von großen Durchströmquerschnitten. Der Anker, als Ringscheibe weist eine nur geringe Masse auf und kann somit schnell von seiner offenen Stellung in Anlage am Kern 25 in Schließstellung gelangen. Die Schließposition des Ventilschließgliedes wird bei Druckbeaufschlagung von der Seite der Einspritzleitung durch die dem Ventilsitz abgewandte Oberfläche des Ventilschließgliedes unterstützt, da der Bereich zwischen Ventilschließglied und Kern 25 sowie der übrige umgebende Bereich, wie die Ringnut 17 mit der axialen Bohrung 18 in dieser Position über die mittlere Öffnung 27 des Ventilschließgliedes in Verbindung steht. Außer der Verbindung über die mittlere Öffnung 27 des Ventilschließgliedes mit der axialen Bohrung besteht eine parallele Verbindung 28 zwischen Einspritzleitung stromaufwärts und des Verteilerventils und Ringnut 17. Damit kann der Öffnungshub des Ventilschließgliedes sehr klein gehalten werden und der Spalt zwischen Kern 25 und Ventilschließglied führt dann zu keiner Drosselung des Druckausgleiches oder zu einem hydraulischen Bremsen der Schließgliedbewegung. Man erhält mit dieser Konstruktion ein sehr schnell schaltendes Magnetventil zur Steuerung großer hydraulischer Mengen.

Mit dem beschriebenen Kraftstoffeinspritzsystem lassen sich zur Steuerung von insbesondere fremdgezündeten, mit direkter Einspritzung arbeitenden Brennkraftmaschinen die Kraftstoffeinspritzzeitpunkte in einem sehr weiten Bereich variieren. Dabei ist das System einfach und kostengünstig aufgebaut und mit einer entsprechenden Steuereinrichtung 14 können die verschiedenen Betriebsparameter wie die Stellung des Gaspedals 29, die Drehzahl, die Lastbedingungen und Umwelteinflüsse berücksichtigt werden.

## Patentansprüche

1. Verfahren zum Betreiben eines Kraftstoffeinspritzsystems für Brennkraftmaschinen mit einer Hochdruckförderpumpe (1), die über einen Kraftstoffverteiler (3) und über jeweils ein elektrisch gesteuertes Verteilerventil (6a, 6b, 6c, 6d) mit mehreren Kraftstoffeinspritzventilen (8a ... 8d) verbindbar ist, wobei pro Förderhub des Pumpenkolbens ein Kraftstoffeinspritzventil mit der Hochdruckförderpumpe verbindbar ist und mit einem in der Verbindung zum Kraftstoffeinspritzventil liegenden, in Förderrichtung öffnenden Druckventil (7a ... 7b) und mit einem elektrisch gesteuerten Kraftstoffeinspritzmengensteuerventil (9), durch das der Pumpenarbeitsraum zur Beendigung der vorgesehenen Einspritzphase mit einer Entlastungsleitung (11) verbindbar ist, dadurch gekennzeichnet, daß die Verteilerventile (6a ... 6d) jeweils vor Beginn einer jeden Einspritzung geöffnet und nach Ende einer jeden Einspritzung geschlossen und durch die Schließzeit des am Verteiler (3) angeschlossenen, Kraftstoffeinspritzmengensteuerventils (9) die Einspritzphase bezüglich Einspritzzeitpunkt und Spritzdauer gesteuert wird.

2. Verfahren nach Anspruch 1, dadurch gekennzeichnet, daß durch die Hochdruckförderpumpe ein kontinuierlicher Kraftstoffstrom zum Kraftstoffverteiler erzeugt wird.

3. Verfahren nach Anspruch 1, dadurch gekennzeichnet, daß durch die Hochdruckförderpumpe intermittierend Kraftstoff in den Kraftstoffverteiler (3) gefördert wird.

4. Kraftstoffeinspritzsystem für Brennkraftmaschinen mit einer das Verfahren gemäß Anspruch 3 ausführenden Steuereinrichtung (14) mit einer Hochdruckförderpumpe (1), die über einen Kraftstoffverteiler (3) und über jeweils ein elektrisch gesteuertes Verteilerventil (6a, 6b, 6c, 6d) mit mehreren Kraftstoffeinspritzventilen (8a ... 8d) verbindbar ist, wobei pro Förderhub des Pumpenkolbens ein Kraftstoffeinspritzventil mit der Hochdruckförderpumpe verbindbar ist und mit einem in der Verbindung zum Kraftstoffeinspritzventil liegenden, in Förderrichtung öffnenden Druckventil (7a ... 7b) und mit einem am Verteiler (3) angeschlossenen, elektrisch gesteuerten Kraftstoffeinspritzmengensteuerventil (9), durch das der Pumpenarbeitsraum zur Beendigung der vorgesehenen Einspritzphase mit einer Entlastungsleitung (11) verbindbar ist, dadurch gekennzeichnet, daß als Hochdruckförderpumpe eine intermittierend arbeitende Pumpe verwendet wird, die mehrere von einem Nocken angetriebene, hin- und hergehende und mit einem konstanten Förderhub zeitlich versetzt zueinander fördernde Pumpenkolben aufweist deren Pumpenarbeitsräume mit dem Kraftstoffverteiler (3) verbunden sind.

5. Kraftstoffeinspritzsystem nach Anspruch 4, dadurch gekennzeichnet, daß als Nocken ein Exzenter vorgesehen ist.

6. Kraftstoffeinspritzsystem nach Anspruch 4 dadurch gekennzeichnet, daß die Pumpenkolben von einem Nocken angetrieben werden mit einer Nockenform, die im Bereich der möglichen Einspritzphase eine konstante Hubgeschwindigkeit des Pumpenkolbens bewirkt (Konstanthubnocken).

7. Kraftstoffeinspritzsystem nach Anspruch 4 bis 6, dadurch gekennzeichnet, daß jeweils ein Pumpenkolben zwei Kraftstoffeinspritzventile nacheinander mit Kraftstoff versorgt.

8. Kraftstoffeinspritzsystem nach einem der vorstehenden Ansprüche 4 bis 7, dadurch gekennzeichnet, daß die Verteilerventile Magnetventile (6a ... 6d) sind, die im stromlosen Zustand unter Einwirkung einer Rückstellfeder (26) geschlossen sind.

9. Kraftstoffeinspritzsystem nach einem der vorstehenden Ansprüche 4 bis 8, dadurch gekennzeichnet, daß die Verteilerventile 3/3-Magnetventile sind, über die im Wechsel je ein Einspritzventil mit der Hochdruckeinspritzpumpe verbindbar ist (Figur 4).

10. Kraftstoffeinspritzsystem nach Anspruch 8, dadurch gekennreichnet, daß die Verteilerventile als Sitzventile ausgebildet sind mit einem gegen die Kraft einer Rückstellfeder (26) von einem Elektromagneten (24) von einem Ventilsitz (20) abhebbaren, ringförmig mit einem mittigen Durchtrittsquerschnitt (27) versehenen als Ventilschließglied (23) dienenden Anker, wobei der Ventilsitz (20) aus zwei konzentrisch zueinander liegenden Ringflächen gebildet ist, zwischen denen eine Ringöffnung (21) als Durchtrittsquerschnitt der vom Verteilerventil gesteuerten, zu dem Einspritzventil führenden Kraftstoffeinstritzleitung (5) angeordnet ist, die andererseits einen ständig offenen Durchtritt durch den mittleren Durchtrittsquerschnitt (7) des Ventilschließgliedes (23) hat.

11. Kraftstoffeinspritzsystem nach Anspruch 10, dadurch gekennzeichnet, daß der mittlere Durchtrittsquerschnitt (27) des Ventilschließgliedes mit einem zu diesem koaxial verlaufenden Teilstück (18) der Kraftstoffeinspritzleitung (5) ständig verbunden ist.

## Claims

1. Method for operating a fuel injection system for internal combustion engines with a high-pressure feed pump (1) which is connectable, via a fuel distributor (3) and via in each case one electrically controlled distributor valve (6a, 6b, 6c, 6d), to a plurality of fuel injection valves (8a ... 8d), one fuel injection valve being connectable, per delivery stroke of the pump piston, to the high-pressure feed pump and to a pressure valve (7a ... 7b), lying in the connection to the fuel injection valve and opening in the delivery direction, and to an electrically controlled fuel-injection-quantity control valve (9) by means of which the pump working space is connectable to a relief conduit (11) to end the envisaged injection phase, characterized in that the distributor valves (6a ... 6d) are in each case opened before the beginning of each injection and closed after the end of each injection and the injection phase concerning injection point and injection duration is controlled by the closing time of the fuel-injection-quantity control valve (9) connected to the distributor (3).

2. Method according to Claim 1, characterized in that a continuous flow of fuel to the fuel distributor is produced by the high-pressure feed pump.

3. Method according to Claim 1, characterized in that fuel is delivered discontinuously into the fuel distributor (3) by the high-pressure feed pump.

4. Fuel injection system for internal combustion engines with a control device (14) carrying out the method according to Claim 3, with a high-pressure feed pump (1) which is connectable, via a fuel distributor (3) and via in each case one electrically controlled distributor valve (6a, 6b, 6c, 6d), to a plurality of fuel injection valves (8a ... 8d), one fuel injection valve being connectable, per delivery stroke of the pump piston, to the high-pressure feed pump and to a pressure valve (7a ... 7b), lying in the connection to the fuel injection valve and opening in the delivery direction, and to an electrically controlled fuel-injection-quantity control valve (9) which is connected to the distributor (3) and by means of which the pump working space is connectable to a relief conduit (11) to end the envisaged injection phase, characterized in that a pump which works discontinuously is used as the high-pressure feed pump, which pump has a plurality of pump pistons which are driven by a cam, reciprocate and deliver with a constant delivery stroke in a temporally offset manner with respect to one another, the pump working spaces of which are connected to the fuel distributor (3).

5. Fuel injection system according to Claim 4, characterized in that an eccentric is provided as the cam.

6. Fuel injection system according to Claim 4, characterized in that the pump pistons are driven by a cam having a cam shape which brings about a constant stroke speed of the pump piston in the region of the possible injection phase (constant lifting cam).

7. Fuel injection system according to Claim 4 to 6, characterized in that in each case one pump piston supplies two fuel injection valves in succession with fuel.

8. Fuel injection system according to one of the above Claims 4 to 7, characterized in that the distributor valves are solenoid valves (6a ... 6d) which are closed in the de-energized state by the action of a restoring spring (26).

9. Fuel injection system according to one of the above Claims 4 to 8, characterized in that the distributor valves are 3/3-way solenoid valves via which in each case one injection valve is connectable in alternation to the high-pressure injection pump (Figure 4).

10. Fuel injection system according to Claim 8, characterized in that the distributor valves are designed as seat valves with an armature which can be lifted from a valve seat (20) by an electromagnet (24) counter to the force of a restoring spring (26), is provided annularly with a central passage cross-section (27) and serves as a valve closing member (23), the valve seat (20) being formed from two ring surfaces which lie concentrically with respect to each other and between which a ring opening (21) is arranged as passage cross-section of the fuel injection conduit (5) which is controlled by the distributor valve, leads to the injection valve and, on the other side, has a continuously open passage through the central passage cross-section (7) of the valve closing member (23).

11. Fuel injection system according to Claim 10, characterized in that the central passage cross-section (27) of the valve closing member is continuously connected to a section (18), running coaxially with respect to the latter, of the fuel injection conduit (5).

## Revendications

1. Procédé de mise en oeuvre d'un système d'injection de carburant pour des moteurs à combustion interne avec une pompe d'alimentation (1) à haute pression qui est reliée par un distributeur de carburant (3) et par une soupape distributrice à commande électrique (6a, 6b, 6c, 6d) respective à plusieurs injecteurs de carburant (8a...8d), et par course d'alimentation du piston de pompe, un injecteur de carburant est relié à la pompe d'alimentation à haute pression et à une soupape de pression (7a...7b) placée dans la liaison avec l'injecteur et qui s'ouvre dans la direction de l'alimentation ainsi qu'avec une soupape de dosage de carburant (9) à commande électrique, qui peut relier la chambre de travail de la pompe à une conduite de décharge (11) pour terminer la phase d'injection prévue, procédé caractérisé en ce que les soupapes distributrices (6a...6d) sont respectivement ouvertes avant le début de chaque injection et elles sont fermées après la fin de chaque injection et par le temps de fermeture de la soupape de dosage de carburant (9) reliée au distributeur (3), on commande la phase d'injection quant à l'instant de l'injection et la durée de l'injection.

2. Procédé selon la revendication 1, caractérisé en ce que la pompe d'alimentation à haute pression génère un courant continu de carburant vers le distributeur de carburant.

3. Procédé selon la revendication 1, caractérisé en ce que la pompe d'alimentation à haute pression fournit par intermittence du carburant au distributeur de carburant (3).

4. Système d'injection de carburant pour des moteurs à combustion interne avec une installation de commande (14) mettant en oeuvre le procédé de la revendication 3, comprenant une pompe d'alimentation à haute pression (1) reliée par un distributeur de carburant (3) et par chaque fois une soupape distributrice à commande électrique (6, 6b, 6c, 6d) à plusieurs injecteurs de carburant (8a...8d), et par course d'alimentation du piston de pompe, un injecteur de carburant peut être relié à la pompe d'alimentation à haute pression et avec une soupape de pression (7a...7b) s'ouvrant dans le sens de l'alimentation, et qui est placée dans la liaison vers l'injecteur de carburant ainsi qu'une soupape de dosage de carburant (9) à commande électrique reliée au distributeur (3), qui peut relier la chambre de travail de la pompe à une conduite de décharge (11) pour terminer la phase d'injection prévue, système caractérisé en ce que la pompe d'alimentation à haute pression est une pompe à fonctionnement intermittent ayant plusieurs pistons de pompe entraînés par une came suivant un mouvement alternatif et de manière décalée dans le temps avec une course d'alimentation constante, les chambres de travail de la pompe étant reliées au distributeur de carburant 3.

5. Système d'injection de carburant selon la revendication 4, caractérisé en ce que les cames sont constituées par un excentrique.

6. Système d'injection de carburant selon la revendication 4, caractérisé en ce que les pistons de pompe sont entraînés par une came dont la forme assure dans la zone de la phase d'injection possible, une vitesse de translation constante pour le piston de pompe (came à course constante).

7. Système d'injection de carburant selon les revendications 4 à 6, caractérisé en ce que chaque fois un piston de pompe alimente en carburant, successivement, deux injecteurs.

8. Système d'injection de carburant selon l'une des revendications précédentes 4 à 7, caractérisé en ce que les soupapes distributrices sont des soupapes électromagnétiques (6a...6d) qui sont fermées sous l'action d'un ressort de rappel (26) lorsqu'elles sont coupées de l'alimentation électrique.

9. Système d'injection de carburant selon l'une des revendications précédentes 4 à 8, caractérisé en ce que les soupapes distributrices sont des électrovannes à 3/3 voies reliant chaque fois un injecteur en alternance à la pompe d'injection à haute pression (figure 4).

10. Système d'injection de carburant selon la revendication 8, caractérisé en ce que les soupapes distributrices sont des soupapes à siège avec un organe d'obturation (23) susceptible d'être soulevé d'un siège de soupape (20) contre la force d'un ressort de rappel (26) par un électro-aimant (24), cet organe d'obturation en forme d'anneau ayant un passage central (27) et servant d'induit, le siège de soupape (20) étant formé par deux surfaces annulaires concentriques entre lesquelles une ouverture annulaire (21) est commandée comme section de passage de la conduite d'injection (5) allant de la soupape distributrice vers l'injection, et qui possède par ailleurs une section constamment ouverte dans la section de passage centrale (27) de l'organe d'obturation (23).

11. Système d'injection de carburant selon la revendication 10, caractérisé en ce que la section de passage centrale (27) de l'organe d'obturation est reliée en permanence à la partie (18) de la conduite d'injection de carburant (5) qui lui est coaxiale.
